# EUROPÄISCHE PATENTSCHRIFT

(11) **EP 3 626 951 B1**
(45) Veröffentlichungstag und Bekanntmachung des Hinweises auf die Patenterteilung: **10.03.2021**
(21) Anmeldenummer: 19197672.9
(22) Anmeldetag: 17.09.2019
(51) Int. Cl.: F02D 9/10, F02D 9/04, F16K 1/22, F16K 31/04, F16D 3/06

(54) **ABGASKLAPPE**
EXHAUST FLAP
CLAPET D'ÉCHAPPEMENT

(30) Priorität: 24.09.2018 DE 102018123403
(43) Veröffentlichungstag der Anmeldung: 25.03.2020
(73) Patentinhaber: Eberspächer Exhaust Technology GmbH & Co. KG, 66539 Neunkirchen (DE)
(72) Erfinder: Zeumer, Annika, 73249 Wernau (DE); Schmitt, Steffen, 73760 Ostfildern (DE)
(74) Vertreter: Ruttensperger Lachnit Trossin Gomoll

(56) Entgegenhaltungen:
- DE-A1-102015 202 211
- DE-A1-102016 203 794
- DE-A1-102017 105 889
- DE-B3-102014 113 332

## Beschreibung

Die vorliegende Erfindung betrifft eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende, einen Schwenkantrieb für die Schwenkwelle sowie eine die Schwenkwelle mit einer Antriebswelle des Schwenkantriebs zur gemeinsamen Drehung um die Schwenkachse koppelnde Kopplungsanordnung, wobei die Kopplungsanordnung einen mit der Antriebswelle in Drehkopplungsformschlusseingriff stehenden ersten Kopplungsbereich und einen mit der Schwenkwelle in Drehkopplungsformschlusseingriff stehenden zweiten Kopplungsbereich umfasst.

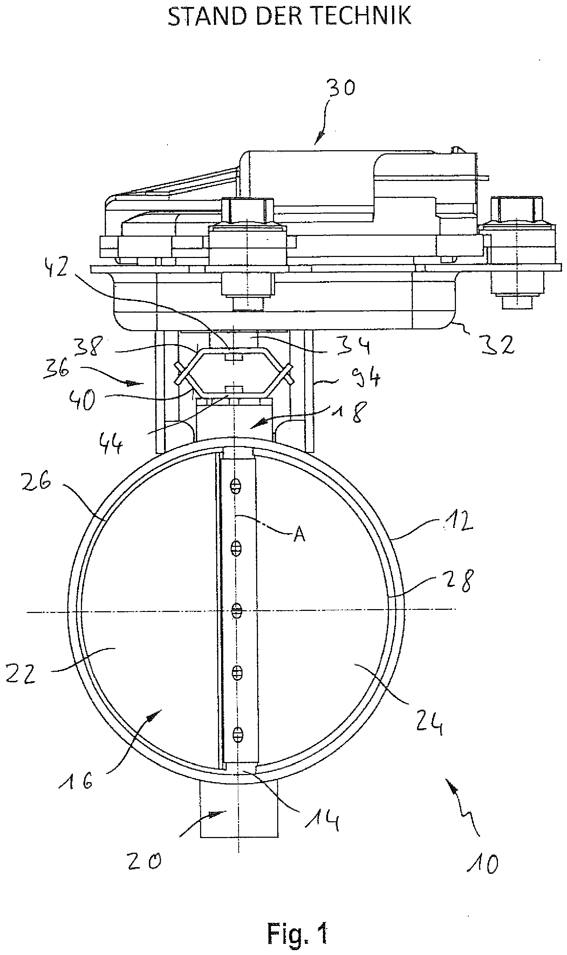

Eine derartige Abgasklappe ist aus der DE 10 2016 114 704 A1 bekannt. Diese in Fig. 1 dargestellte Abgasklappe 10 umfasst ein in eine Abgasanlage zu integrierendes Klappenrohr 12, welches einen beispielsweise kreisrunden Querschnitt aufweist und ein Gehäuse für eine an einer Schwenkwelle 14 um eine Schwenkachse A drehbar getragene Klappenblende 16 bereitstellt. Die Schwenkwelle 14 ist in ihren beiden aus dem Abgasrohr 12 hervorstehenden Endbereichen an jeweiligen Lagerungsansätzen 18 bzw. 20 um die Schwenkachse A drehbar getragen. Die an der Schwenkwelle 14 vorgesehene Klappenblende 16 weist zwei Blendenflügel 24 auf, die in dem in Fig. 1 dargestellten Schließzustand der Klappenblende in Anlage an jeweiligen Flügelanschlägen 26, 28 am Innenumfang des Klappenrohrs 12 sind und somit den Abgasströmungsweg durch das Klappenrohr 12 hindurch im Wesentlichen absperren. Bei Verdrehung der Klappenblende 16 um die Schwenkachse A ausgehend von dem in Fig. 1 dargestellten Schließzustand beispielsweise um etwa 90° sind die beiden Klappenflügel 22, 24 zur Abgasströmungsrichtung im Wesentlichen parallel ausgerichtet, so dass das Klappenrohr 12 im Wesentlichen ungehindert von Abgas durchströmt werden kann.

Am Klappenrohr 12 ist ein Schwenkantrieb 30 für die Klappenblende 16 getragen. Der Schwenkantrieb 30 umfasst einen in einem Gehäuse 32 untergebrachten Elektromotor. Eine aus dem Gehäuse 32 hervorstehende Antriebswelle 34 des Klappenantriebs 30 ist über eine allgemein mit 36 bezeichnete Kopplungsanordnung zur gemeinsamen Drehung mit der Schwenkwelle 14 gekoppelt und kann somit bei Erregung des Elektromotors die Klappenblende 16 um die Schwenkachse A drehen.

Die Kopplungsanordnung 36 umfasst zwei beispielsweise aus Federblech oder dergleichen gebogene Kopplungselemente 38, 40. Das Kopplungselement 38 stellt einen ersten Kopplungsbereich 42 bereit, in welchem die Kopplungsanordnung 36 in Drehkopplungsformschlusseingriff mit der Antriebswelle steht. Das Kopplungselement 40 stellt einen zweiten Kopplungsbereich 44 bereit, in welchem die Kopplungsanordnung 36 in Drehkopplungsformschlusseingriff mit der Schwenkwelle 14 steht. Die beiden Kopplungselemente 38, 40 greifen ferner in ihren beiden radial bezüglich der Schwenkachse A außen liegenden Bereichen ineinander ein und sind auf diese Art und Weise miteinander in Drehkopplungsformschlusseingriff und axial bezüglich einander abgestützt, so dass über diese axiale Abstützung und die dadurch generierte Vorspannung die Schwenkwelle 14 in Richtung von der Antriebswelle 34 weg vorgespannt ist und somit in einer definierten Positionierung in axialer Richtung bezüglich der Schwenkachse A gehalten ist.

Eine Abgasklappe gemäß dem Oberbegriff des Anspruchs 1 ist aus der DE 10 2014 113 332 B3 bekannt. Bei dieser bekannten Abgasklappe ist eine mit einer Antriebswelle und einer eine Klappenblende tragenden Schwenkwelle in Drehkopplungsformschlusseingriff stehende Kopplungsanordnung durch ein als Schraubendruckfeder ausgebildetes Vorspannorgan axial bezüglich der Schwenkwelle abgestützt und in Richtung auf die Antriebswelle zu vorgespannt.

Die DE 10 2017 105 889 A1, DE 10 2015 202 211 A1 und DE 10 2016 203 794 A1 offenbaren Abgasklappen, bei welchen jeweils zwei Bauteile einer eine Antriebswelle mit einer eine Klappenblende tragenden Schwenkwelle koppelnden Kopplungsanordnung durch ein zwischen diesen beiden Bauteilen wirkendes Vorspannorgan bezüglich einander vorgespannt sind.

Es ist die Aufgabe der vorliegenden Erfindung eine Abgasklappe vorzusehen, bei welcher eine definierte Positionierung der Antriebswelle bezüglich der Schwenkwelle gewährleistet ist.

Erfindungsgemäß wird diese Aufgabe gelöst durch eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende, einen Schwenkantrieb für die Schwenkwelle sowie eine die Schwenkwelle mit einer Antriebswelle des Schwenkantriebs zur gemeinsamen Drehung um die Schwenkachse koppelnde Kopplungsanordnung, wobei die Kopplungsanordnung einen mit der Antriebswelle in Drehkopplungsformschlusseingriff stehenden ersten Kopplungsbereich und einen mit der Schwenkwelle in Drehkopplungsformschlusseingriff stehenden zweiten Kopplungsbereich umfasst.

Diese Abgasklappe zeichnet sich aus durch ein bezüglich der Kopplungsanordnung einerseits und bezüglich einer Welle von Antriebswelle und Schwenkwelle andererseits abgestütztes Vorspannorgan, wobei durch das Vorspannorgan die Kopplungsanordnung in Richtung der Schwenkachse von der einen Welle von Antriebswelle und Schwenkwelle axial weg, also auf die andere Welle axial zu vorgespannt ist und bezüglich der einen Welle von Antriebswelle und Schwenkwelle um die Schwenkachse vorgespannt ist.

Bei der erfindungsgemäß aufgebauten Abgasklappe sind die Funktion der Drehkopplung von Antriebswelle und Schwenkwelle einerseits und die Funktion der Erzeugung einer Vorspannkraft zur Herbeiführung einer definierten Positionierung der beiden Wellen andererseits voneinander baulich entkoppelt. Dies gestattet es, die zum Bereitstellen dieser Funktionen vorgesehenen Bauteile bzw. Baugruppen, nämlich die Kopplungsanordnung einerseits und das Vorspannorgan andererseits, für die durch diese zu erfüllenden Funktionen optimiert auszugestalten.

Bei einer einfach zu realisierenden, gleichwohl zuverlässig arbeitenden Ausgestaltung kann das Vorspannorgan eine Schraubenfeder umfassen. Es ist darauf hinzuweisen, dass eine derartige Schraubenfeder nicht notwendigerweise mit in Richtung der Schwenkachse, welche im Wesentlichen auch einer Federlängsachse entspricht, konstantem Windungsradius aufgebaut sein muss. Die Schraubenfeder kann in Richtung der Federlängsachse einen variierenden Windungsradius aufweisen und somit auch einen nach Art einer Spiralfeder variierenden Verlauf der Federwindungen aufweisen.

Für eine sowohl die Vorspannung in axialer Richtung, als auch die Vorspannung in Umfangsrichtung gewährleistenden Wechselwirkung zwischen dem Vorspannorgan und der einen Welle ist das Vorspannorgan bezüglich der einen Welle über ein Verbindungselement abgestützt.

Insbesondere kann vorgesehen sein, dass das Vorspannorgan in einem ersten Verbindungsbereich bezüglich der einen Welle über das Verbindungselement sich axial abstützend an die eine Welle in Umfangsrichtung um die Schwenkachse fest angekoppelt ist und in einem zweiten Verbindungsbereich bezüglich der Kopplungsanordnung sich axial abstützend an die Kopplungsanordnung in Umfangsrichtung um die Schwenkachse fest angekoppelt ist.

Vor allem bei Ausgestaltung des Vorspannorgans als Schraubenfeder kann der erste Verbindungsbereich einen in einem ersten axialen Endbereich des Vorspannorgans sich erstreckenden ersten Windungsendabschnitt umfassen, und der zweite Verbindungsbereich kann einen in einem zweiten axialen Endbereich des Vorspannorgans sich erstreckenden zweiten Windungsendabschnitt umfassen.

Zur stabilen Kopplung des Vorspannorgans mit dem Verbindungselement wird vorgeschlagen, dass der erste Verbindungsbereich des Vorspannorgans an das Verbindungselement fest angekoppelt ist.

Um die in axialer Richtung und in Umfangsrichtung wirkende Abstützkraft zwischen der einen Welle und dem Vorspannorgan übertragen zu können, ist das Verbindungselement an der einen Welle sich axial abstützend mit der einen Welle drehfest gekoppelt. Insbesondere kann hierfür vorgesehen sein, dass an der einen Welle wenigstens eine, vorzugsweise mehrere Verbindungsaussparungen vorgesehen sind, und dass an dem Verbindungselement wenigstens ein, vorzugsweise in Zuordnung zu jeder Verbindungsaussparung ein in eine Verbindungsaussparung eingreifender und in einem Verbindungszustand an der einen Welle sich axial und in Umfangsrichtung abstützender Verbindungsvorsprung vorgesehen ist.

Bei einer zur Erzeugung der Vorspannung in Umfangsrichtung besonders vorteilhaften Ausgestaltung kann die wenigstens eine Verbindungsaussparung einen in Richtung zu der anderen Welle offenen, vorzugsweise im Wesentlichen axial sich erstreckenden Einführabschnitt sowie einen in Richtung von der anderen Welle weg axial abgeschlossenen, in Umfangsrichtung bezüglich des Einführabschnitts versetzten und vermittels eines Übergangsabschnitts mit dem Einführabschnitt verbundenen, vorzugsweise im Wesentlichen axial sich erstreckenden Verbindungsabschnitt umfassen, wobei eine axiale Bewegung eines Verbindungsvorsprungs in der wenigstens einen Verbindungsaussparung durch deren Einführabschnitt zu deren Verbindungsabschnitt eine Verdrehung des Verbindungselements bezüglich der einen Welle um die Schwenkachse bewirkt. Die beim Bewegen des Verbindungselements in seinen Verbindungszustand mit der einen Welle hervorgerufene Verdrehung des Verbindungselement um die Schwenkachse führt auch zu einer Verwindung des Vorspannorgans in sich, da bei der Drehbewegung des Verbindungselements auch der an dieses fest angekoppelte erste Verbindungsbereich des Vorspannorgans in Umfangsrichtung mitgenommen wird, während der an die Kopplungsanordnung fest angebundene zweite Verbindungsbereich dieser Umfangsbewegung nicht oder nur begrenzt folgen kann. Das Bewegen des Verbindungselements in seinen Verbindungszustand führt somit automatisch zum Erzeugen der in Umfangsrichtung wirkenden Vorspannung.

Um eine ausreichende Vorspannwirkung sowohl in axialer Richtung, als auch in Umfangsrichtung generieren zu können, kann das Vorspannorgan wenigstens eine, vorzugsweise eine Mehrzahl von Windungen umfassen.

Für eine stabile Drehkopplung der beiden Wellen miteinander wird vorgeschlagen, dass im ersten Kopplungsbereich die Kopplungsanordnung eine erste Formschluss-Eingriffsöffnung mit einer Eingriffsöffnung-Querschnittsgeometrie aufweist und die Antriebswelle ein in die erste Formschluss-Eingriffsöffnung eingreifendes Formschluss-Eingriffsende mit zur Eingriffsöffnung-Querschnittsgeometrie der ersten Formschluss-Eingriffsöffnung komplementärer Eingriffsende-Querschnittsgeometrie aufweist, und dass im zweiten Kopplungsbereich die Kopplungsanordnung eine zweite Formschluss-Eingriffsöffnung mit einer Eingriffsöffnung-Querschnittsgeometrie aufweist und die Schwenkwelle ein in die zweite Formschluss-Eingriffsöffnung eingreifendes Formschluss-Eingriffsende mit zur Eingriffsöffnung-Querschnittsgeometrie der zweiten Formschluss-Eingriffsöffnung komplementärer Eingriffsende-Querschnittsgeometrie aufweist. Besonders vorteilhaft ist dabei eine Ausgestaltung, bei welcher die verschiedenen Querschnittsgeometrien jeweils vieleckig ausgestaltet sind.

Um eine durch die Formgebung des Eingriffsendes der einen Welle ungehinderte axiale Vorspannung der Kopplungsanordnung in Richtung auf die andere Welle zu erzeugen zu können, wird vorgeschlagen, dass das Eingriffsende der einen Welle in Richtung der Schwenkachse im Wesentlichen zylindrisch ausgebildet ist. Die im Wesentlichen zylindrische Ausgestaltung des Eingriffsendes der einen Welle ermöglicht, unabhängig von der jeweiligen beispielsweise vieleckigen Querschnittsgeometrie, eine im Wesentlichen ungehinderte axiale Verschiebbarkeit der einen Welle bezüglich der Kopplungsanordnung auch in dem Bereich, in welchem diese in Drehkopplungsformschlusseingriff miteinander stehen.

Bei einer vorteilhaften Ausgestaltung kann vorgesehen sein, dass die eine Welle die Antriebswelle und die andere Welle die Schwenkwelle ist.

Für eine einfache Montage einer erfindungsgemäß aufgebauten Abgasklappe wird vorgeschlagen, dass die Kopplungsanordnung und das Vorspannorgan an der anderen Welle gegen Loslösen von der anderen Welle gesichert getragen sind. Insbesondere bei fester Ankopplung des Vorspannorgans an das Verbindungsorgan ist dabei auch das Verbindungsorgan an der anderen Welle gesichert getragen, so dass die andere Welle mit der Kopplungsanordnung, dem Vorspannorgan und dem Verbindungsorgan eine vormontierte Baugruppe bilden kann.

Für einen einfach zu realisierenden, gleichwohl stabilen Aufbau kann die Kopplungsanordnung ein im ersten Kopplungsbereich und im zweiten Kopplungsbereich im Wesentlichen plattenartig ausgebildetes und zur Schwenkachse im Wesentlichen orthogonal ausgerichtetes Kopplungselement umfassen. Beispielsweise kann dabei insbesondere bei einer einstückigen und somit leicht zu realisierenden Ausgestaltung der Kopplungsanordnung in wenigstens einem der Kopplungsbereiche die Kopplungsanordnung einander überlappend angeordnete Kopplungselement-Endbereiche aufweisen.

Die vorliegende Erfindung wird nachfolgend mit Bezug auf die beiliegenden Figuren detailliert beschrieben. Es zeigt:
- Fig. 1: eine aus dem Stand der Technik bekannte Abgasklappe;
- Fig. 2: eine perspektivische Ansicht der erfindungsgemäß ausgestalteten Kopplung einer Antriebswelle eines Schwenkantriebs einer Abgasklappe mit einer Schwenkwelle der Abgasklappe;
- Fig. 3: eine der Fig. 2 entsprechende Ansicht, betrachtet aus einer anderen Perspektive;
- Fig. 4: eine weitere der Fig. 2 entsprechende Ansicht, betrachtet aus einer anderen Perspektive;
- Fig. 5: eine Detailansicht, welche die Kopplung eines Verbindungselements mit der Antriebswelle des Schwenkantriebs zeigt;
- Fig. 6: die mit der Antriebswelle eines Schwenkantriebs gekoppelte Schwenkwelle einer Klappenblende.

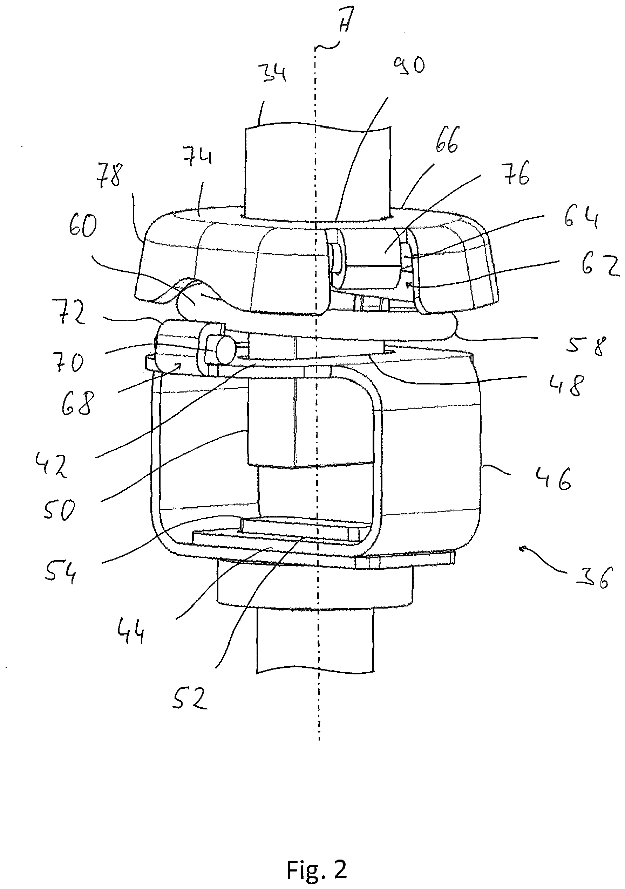

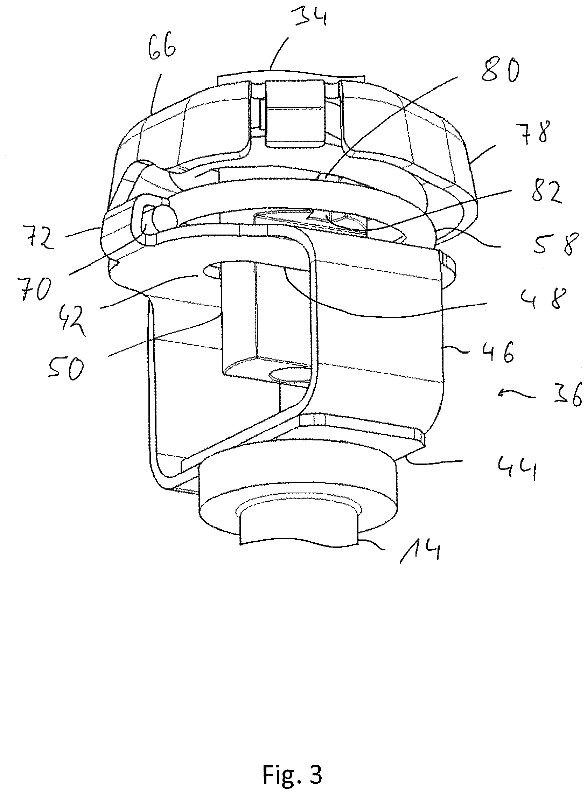

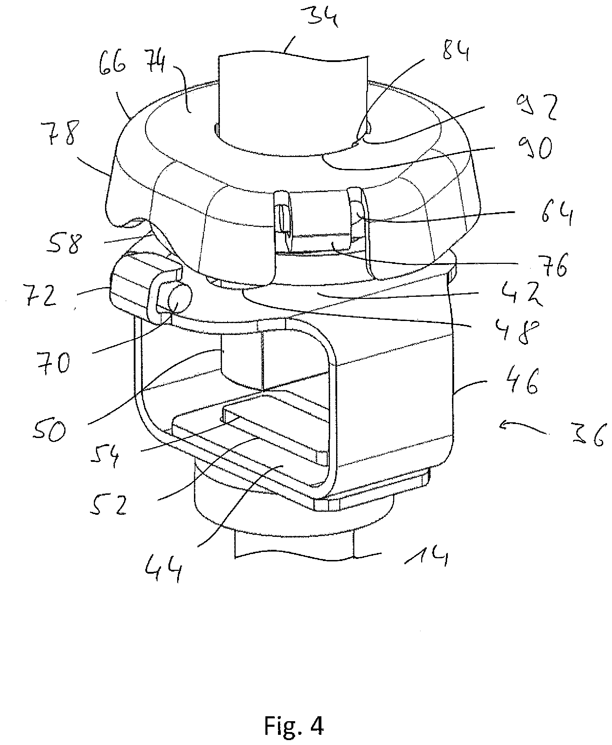

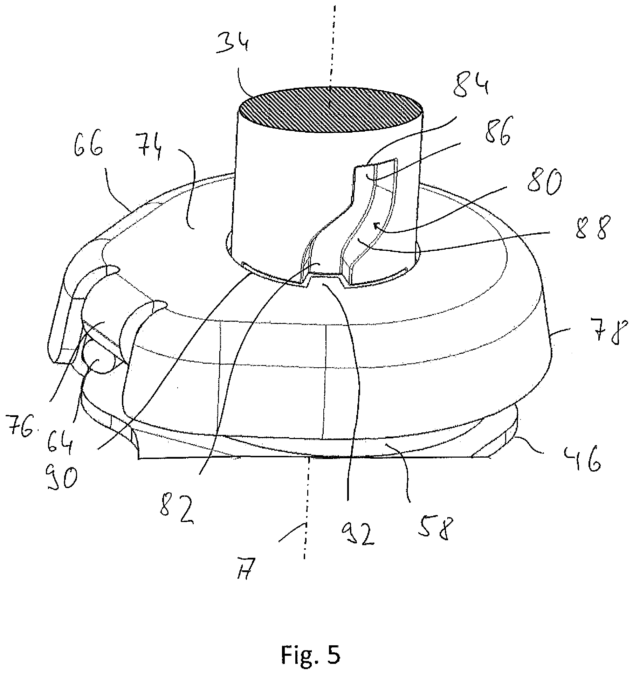

Bevor im Folgenden mit Bezug auf die Fig. 2 bis 6 die erfindungsgemäß ausgestaltete Kopplung einer Antriebswelle mit einer Schwenkwelle einer Abgasklappe detailliert beschrieben wird, wird darauf hingewiesen, dass der grundsätzliche Aufbau einer erfindungsgemäß aufgebauten Abgasklappe mit einem Schwenkantrieb, einem Klappenrohr und einer in dem Klappenrohr vorgesehenen und durch den Schwenkantrieb zur Drehung um eine Schwenkachse antreibbaren Klappenblende dem vorangehend mit Bezug auf die Fig. 1 beschriebenen Aufbau entsprechen kann. Es wird daher bezüglich des grundsätzlichen Aufbaus einer auch erfindungsgemäß aufgebauten Klappenblende auf die Fig. 1 und die zugehörige Beschreibung verwiesen.

Die Fig. 2 bis 6 zeigen ein näherungsweise kastenartiges Kopplungselement 46 der Kopplungsanordnung 36, das beispielsweise aus einem Blechstreifen gebogen sein kann und in einem ersten plattenartigen Bereich den ersten Kopplungsbereich 42 und einem durch einander überlappende Enden gebildeten zweiten plattenartigen Bereich den zweiten Kopplungsbereich 44 bereitstellt. Im ersten Kopplungsbereich 42 weist das Kopplungselement 46 eine erste Formschlusseingriffsöffnung 48 auf, in welche ein Formschluss-Eingriffsende 50 der Antriebswelle 34 eingreift. Die erste Formschluss-Eingriffsöffnung 48 weist eine beispielsweise langlochartig ausgebildete Eingriffsöffnung-Querschnittsgeometrie auf, zu welcher eine Eingriffsende-Querschnittsgeometrie des Formschluss-Eingriffsendes 50 der Antriebswelle 34 komplementär ist. Beispielsweise können die beiden Querschnittsgeometrien vieleckig, beispielsweise im Wesentlichen rechteckig, ausgebildet sein. Das Formschluss-Eingriffsende 50 der Antriebswelle 34 ist im Wesentlichen zylindrisch geformt, weist also in seinem in Wechselwirkung mit dem Kopplungselement 46 tretenden Längenbereich eine in axialer Richtung sich im Wesentlichen nicht verändernde Querschnittsgeometrie und Querschnittsabmessung auf.

In entsprechender Weise ist im zweiten Kopplungsbereich 44 eine zweite Formschluss-Eingriffsöffnung 52 ausgebildet, in welche ein Formschluss-Eingriffsende 54 der Schwenkwelle 14 eingreift. Auch hier können eine Eingriffsöffnung-Querschnittsgeometrie der zweiten Formschluss-Eingriffsöffnung 52 und eine Eingriffsende-Querschnittsgeometrie des Formschluss-Eingriffsendes 54 der Schwenkwelle 14 zueinander komplementär sein, so dass die Schwenkwelle 14 mit ihrem Formschluss-Eingriffsende 54 im Wesentlichen spielfrei in die zweite Formschluss-Eingriffsöffnung 52 eingreifen kann. Dies dann dadurch unterstützt sein, dass das Formschluss-Eingriffsende 54 sich in Richtung zu seinem freien Ende, also in Richtung auf die Antriebswelle 34 zu verjüngend ausgebildet ist.

Ein Vorspannorgan 58 ist als Schraubendruckfeder ausgebildet und weist mehrere die Schwenkachse A umgebende Windungen 60 auf. In einem von dem Kopplungselement 46 entfernten axialen Endbereich 62 weist das Vorspannorgan 58 einen beispielsweise durch einen Windungsendabschnitt 64 desselben bereitgestellten ersten Verbindungsbereich auf, in welchem das Vorspannorgan 58 an einem napf- oder topfförmig geformten Verbindungselement 66 festgelegt ist. In einem zweiten axialen Endbereich 68 weist das Vorspannorgan 58 einen beispielsweise durch einen zweiten Windungsendabschnitt 70 bereitgestellten zweiten Verbindungsbereich auf, in welchem das Vorspannorgan 58 am Verbindungselement 46 festgelegt ist. Hierzu kann am Verbindungselement 46 im Bereich des ersten Kopplungsbereichs 42 eine Befestigungslasche 72 vorgesehen sein, die um den Windungsendabschnitt 70 gelegt ist und durch Verpressen diesen fest klammert. In entsprechender Weise kann am Verbindungselement 66 von einem Bodenbereich 74 desselben abstehend eine Verbindungslasche 76 vorgesehen sein, welche den ersten Windungsendabschnitt 74 umgibt und durch Verpressen diesen fest klammert.

Während ein vom Bodenbereich 74 des Verbindungselements 66 näherungsweise in Richtung der Schwenkachse A abstehender Umfangswandungsbereich 78 eine definierte Positionierung des Vorspannorgans 58 in radialer Richtung gewährleistet, ist der Bodenbereich 74 zur Verbindung des Verbindungselements 66 mit der Antriebswelle 34 ausgebildet. Hierzu weist die Antriebswelle 34 beispielsweise zwei in Umfangsrichtung zueinander in Abstand angeordnete Verbindungsaussparungen 80 auf. Jede der Verbindungsaussparungen 80 weist einen axial in Richtung auf das Formschluss-Eingriffsende 50 der Antriebswelle 34 bzw. auf die Schwenkwelle 14 zu offenen und näherungsweise in axialer Richtung sich erstreckenden Einführabschnitt 82 sowie einen in Umfangsrichtung dazu versetzten und durch eine axiale Stirnwandung 84 axial in Richtung vom Formschluss-Eingriffsende 50 bzw. der Schwenkwelle 14 weg abgeschlossenen, näherungsweise axial sich erstreckenden Verbindungsabschnitt 86 auf. Über einen im Wesentlichen schräg angestellt verlaufenden Verbindungsabschnitt 88 geht der Einführabschnitt 82 in den Verbindungsabschnitt 86 über.

Jede der Verbindungsaussparungen 80 bildet mit ihrer nach radial außen offenen nutartigen Ausgestaltung eine Führungskulisse für einen am Bodenbereich 74 nach radial innen in eine daran vorgesehene Öffnung 90 vorstehenden Verbindungsvorsprung 92. Jeder Verbindungsvorsprung 92 ist so geformt bzw. dimensioniert, dass er in Umfangsrichtung näherungsweise spielfrei in die zugeordnete bzw. diesen aufnehmende Verbindungsaussparung 80 eingreift. Beim Bewegen eines jeweiligen Verbindungsvorsprungs 92 in eine Verbindungsaussparung 80 hinein kann zunächst das Verbindungselement 66 axial verschoben werden, bis ein jeweiliger Verbindungsvorsprung 92 in den Bereich des Verbindungsabschnitts 88 gelangt. Aufgrund der schrägen Anstellung des Verbindungsabschnitts 88 wird eine Verdrehung des Verbindungselements 66 um die Schwenkachse A erzwungen, wenn das Verbindungselement 66 weiter in Richtung auf den Verbindungsabschnitt 86 bzw. die Stirnwandung 84 zu bewegt wird. Am Ende dieser Bewegung bewegt das bezüglich der Ausgangsstellung in Umfangsrichtung verdrehte Verbindungselement 66 sich wieder axial, bis der durch den Verbindungsabschnitt 86 sich hindurchbewegende Verbindungsvorsprung 92 in Anlage an den eine jeweilige Verbindungsaussparung 80 axial abschließenden bzw. beendenden und somit eine weitere axiale Bewegung des Verbindungselements 66 unterbindenden Stirnwandung gelangt.

Beim Zusammenbau einer Abgasklappe 10 unter Verwendung der vorangehend mit Bezug auf die Fig. 2 bis 5 beschriebenen Art und Weise der Kopplung der Antriebswelle 34 mit der Schwenkwelle 14 wird zunächst, nachdem die Klappenblende 16 in das Klappenrohr 12 integriert wurde, das Kopplungselement 46 der Kopplungsanordnung 36 zusammen mit dem Vorspannorgan 58 und dem Verbindungselement 66 am Formschluss-Eingriffsende 54 der Schwenkwelle 14 festgelegt. Hierzu wird beispielsweise die zweite Formschluss-Eingriffsöffnung 52 über das Formschluss-Eingriffsende 54 der Schwenkwelle 14 geschoben, bis das Kopplungselement 46 im Bereich seines zweiten Kopplungsbereichs 44 axial an der Schwenkwelle 14 ansteht. In diesem Zustand kann dann eine feste Verbindung zwischen der Schwenkwelle 14 und dem Kopplungselement 46 beispielsweise durch Verschweißung oder Verlötung im Bereich des Formschluss-Eingriffsendes 54 bzw. des zweiten Kopplungsbereichs 44 erzeugt werden. Zur Erlangung der festen Verbindung könnte bei einer alternativen Ausgestaltung ohne in eine Formschluss-Eingriffsöffnung eingreifendes Formschluss-Eingriffsende das Kopplungselement 46 mit seinem plattenartig ausgebildeten zweiten Kopplungsbereich 44 auf eine Stirnfläche der Schwenkwelle 14 aufgesetzt und an diese stumpf angeschweißt werden.

Bereits vor, ggf. aber auch nach dem Anbringen des Verbindungselements 46 an der Schwenkwelle 14 kann dieses mit dem Vorspannorgan 58 und auch dem Verbindungselement 66 montiert werden. Hierzu wird das Vorspannorgan 58 beispielsweise zunächst an dem Kopplungselement 46 oder dem Verbindungselement 66 in seinem jeweils zugeordneten Windungsendabschnitt 70 bzw. 64 durch Umbiegen und Verpressen einer jeweiligen Lasche 72 bzw. 76 festgelegt, bevor in entsprechender Weise die feste Ankopplung des Vorspannorgans 58 an das jeweils andere Element vom Verbindungselement 66 und Kopplungselement 46 realisiert wird.

Nachfolgend wird das in dieser Art und Weise mit der Kopplungsanordnung 36, dem Vorspannorgan 58 und dem Verbindungselement 66 vormontierte und auch die Klappenblende 16 aufweisende Klappenrohr 12 an den Schwenkantrieb 30 montiert. Hierzu kann beispielsweise vom Außenumfang des Klappenrohrs 12 eine Trägerstruktur 94 beispielsweise durch Verschweißung festgelegt sein. Der Schwenkantrieb 30 wird so an das Klappenrohr 12 heranbewegt, dass das Formschluss-Eingriffsende 50 von dessen Antriebswelle 34 durch die Öffnung 90 im Verbindungselement 66 hindurch in die erste Formschluss-Eingriffsöffnung 48 im ersten Kopplungsbereich 42 des Kopplungselements 46 eingeführt wird. Im Zuge dieser Bewegung gelangen die Verbindungsvorsprünge 92 auch in den Bereich der diese aufnehmenden Verbindungsaussparungen 80 und treten zunächst in die Einführabschnitte 82 ein. Eine weiter anhaltende axiale Bewegung des Schwenkantriebs 30 auf das Klappenrohr 12 zu führt dazu, dass die Verbindungsvorsprünge 92 durch die diese aufnehmenden Verbindungsaussparungen 80 hindurch geführt werden, bis sie in die Verbindungsabschnitte 86 und dort in axiale Anlage an den Stirnwandungen 84 oder andere die Verbindungsabschnitte 86 gegen axiale Bewegung der darin aufgenommenen Verbindungsvorsprünge 92 abschließende Formationen gelangen. Im Zuge dieser Bewegung wird, wie vorangehend erläutert, das Verbindungselement 66 um die Schwenkachse A bezüglich der Antriebswelle 34 verdreht. Dieser Verdrehung kann das Vorspannorgan 58 und mit diesem das Kopplungselement 46 nur so lange folgen, bis ein zwischen dem Formschluss-Eingriffsende 50 und dem ersten Kopplungsbereich 42 vorhandenes Umfangsbewegungsspiel aufgebraucht ist. Ist dies der Fall, führt eine bis zum Erreichen des Verbindungszustands fortgesetzte Drehung des Verbindungselements 66 zu einer Umfangsrelativbewegung der beiden Windungsendabschnitte 70, 64 des Vorspannorgans 58 bezüglich einander, so dass das Vorspannorgan 58 in Umfangsrichtung gespannt wird und auf diese Art und Weise eine zwischen der Antriebswelle 34 und dem Kopplungselement 46 wirkende Umfangsvorspannung erzeugt wird.

Da im Verbindungszustand des Verbindungselements 66 bezüglich der Antriebswelle 34 die in den Verbindungsabschnitten 86 der Verbindungsaussparungen 80 aufgenommenen Verbindungsvorsprünge 92 an den jeweiligen Stirnwandungen 84 anliegen, kann das Verbindungselement 66 sich auch nicht weiter bezüglich der Antriebswelle 34 verschieben. Eine fortgesetzte axiale Bewegung des Schwenkantriebs 30 in Richtung auf das Klappenrohr 12 zu bis zur Erlangung der in Fig. 1 auch erkennbaren Montageposition, in welcher der Schwenkantrieb 30 an der Tragestruktur 94 ansteht bzw. durch diese getragen ist, führt zu einer axialen Kompression des Vorspannorgans 58, so dass auf diese Art und Weise das bezüglich der Antriebswelle 34 über das Verbindungselement 66 sich axial abstützende Vorspannorgan 58 eine axiale Vorspannung auf das Kopplungselement 46 und über dieses auf die Schwenkwelle 14 ausübt.

Durch das im dargestellten Ausgestaltungsbeispiel als Schraubendruckfeder ausgeführte Vorspannorgan 58 wird somit einerseits eine definierte Umfangs-Relativpositionierung zwischen der Antriebswelle 34 und dem Kopplungselement 46 erzwungen, so dass bei Drehung der Antriebswelle 34 kein Totgang zwischen dieser und dem Kopplungselement 46 auftreten kann. Gleichzeitig wird durch die vermittels des Vorspannorgans 58 generierte axiale Vorspannung eine definierte Positionierung der Schwenkwelle 14 im Klappenrohr 12 in Richtung der Schwenkachse A erzwungen. Die durch das Vorspannorgan 58 generierte axiale Vorspannwirkung zwischen der Antriebswelle 34 und der Schwenkwelle 14 sorgt weiterhin dafür, dass im Verbindungszustand das Verbindungselement 66 mit seinen Verbindungsvorsprüngen 92 zuverlässig in den diese aufnehmenden Verbindungsabschnitten in Anlage an den diese axial begrenzenden Stirnwandungen 84 gehalten werden und somit das Verbindungselement 66 in definierter Positionierung bezüglich der Antriebswelle 34 gehalten wird.

Es sei darauf hingewiesen, dass die feste Verbindung der Trägerstruktur 94 mit dem Schwenkantrieb 30 beispielsweise durch Formschlusseingriff nach Art eines Bajonettverschlusses oder/und Materialschluss, also beispielsweise Verschweißen, erfolgen kann.

Mit der erfindungsgemäßen Ausgestaltung der Kopplung zwischen der Antriebswelle 34 und der Schwenkwelle 14 wird eine definierte Relativpositionierung dieser beiden Wellen erzwungen, so dass ein zu undefinierten Positionierungen der Klappenblende 16 führendes Bewegungsspiel der beiden Wellen 34, 14 bezüglich einander nicht auftreten kann. Gleichzeitig wird ein zur Wärmeübertragung führender Kontakt zwischen den beiden Wellen 14, 34 im Wesentlichen auf denjenigen Bereich, in welchem das Kopplungselement 46 die Schwenkwelle 14 und die Antriebswelle 34 berührt sowie auf denjenigen Bereich, in welchen das Verbindungselement 66 die Antriebswelle 34 berührt, beschränkt, wodurch eine sehr gute thermische Entkopplung bei hoher mechanischer Festigkeit der zur Kopplung vorgesehenen Baugruppe und auch bei guter Resistenz gegen äußere Einflüsse, insbesondere gegen Korrosion, erreicht wird. Ferner ermöglicht die in Richtung der Schwenkachse vorhandene Bewegungsentkopplung der beiden Wellen 14, 34 bezüglich einander thermisch induzierte Relativbewegungen, ohne dass in irgendwelchen Lagerungsbereichen Zwängungen entstehen, und die Kompensation von Bauteiltoleranzen sowie auch im Fertigungsprozess auftretenden Montagetoleranzen.

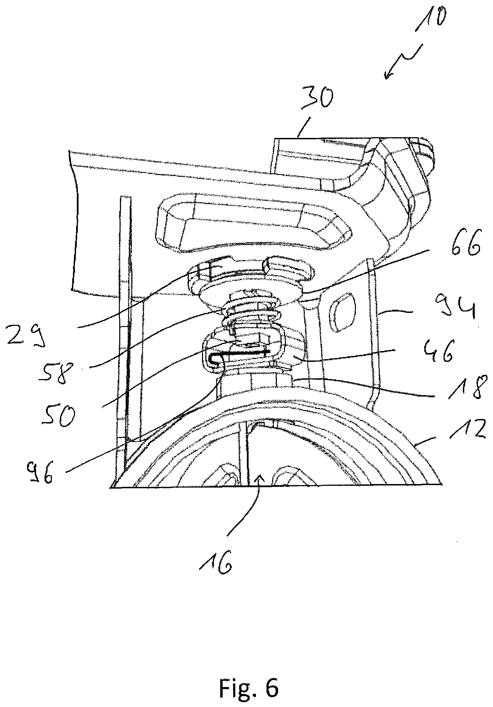

Die thermische Entkopplung der beiden Wellen 14, 34 voneinander kann dadurch unterstützt werden, dass, wie in Fig. 6 dargestellt, ein beispielsweise am Kopplungselement 46 gehaltenes Wärmestrahlung-Abschirmelement 96, beispielsweise aus Blechmaterial gebildet, zwischen den einander gegenüberliegenden Enden der beiden Wellen 14, 34 liegt und somit diese auch gegen Wärmeübertragung durch Strahlung bezüglich einander abschirmt.

Ferner zeigt die Fig. 6, dass das Verbindungselement 66 beispielsweise auch plattenartig, also ohne Umfangswandlungsbereich ausgebildet sein kann. Das auch in dieser Ausgestaltung als Schraubendruckfeder ausgebildete Vorspannorgan 58 kann an dem beispielsweise plattenartig ausgebildeten Verbindungselement 66 oder/und dem Kopplungselement 46 in seinen Windungsendabschnitten 64, 70 durch axial umgebogene und in entsprechende Aussparungen im Verbindungselement 66 bzw. Kopplungselement 46 eingreifende Enden in Umfangsrichtung festgelegt sein.

Es sei abschließend darauf hingewiesen, dass selbstverständlich auch eine Ausgestaltung realisierbar ist, bei welcher das Vorspannorgan zwischen der Schwenkwelle 14 und dem Kopplungselement 46 wirkt. Bei derartiger Ausgestaltung wäre dann die jeweilige Formgebung der einander zugewandt positionierten Enden der beiden Wellen 34,14 gegeneinander zu tauschen, so dass in einem Vormontagezustand das Kopplungselement 46 und mit diesem das Vorspannorgan 58 und dem Verbindungselement 66 mit der Antriebswelle 34 vormontiert ist und bei der Endmontage die Schwenkwelle 34 dann in Formschlusseingriff mit dem Verbindungselement 66 gebracht wird. Ferner wird darauf hingewiesen, dass beispielsweise die Schwenkwelle 14 mehrstückig aufgebaut sein kann und einen am Klappenrohr 12 schwenkbar getragenen und die Blendenflügel 22, 24 tragenden Wellenabschnitt sowie einen das Formschluss-Eingriffsende 54 bereitstellenden, als separates Bauteil ausgebildeten Wellenabschnitt aufweisen kann. Alternativ kann die Schwenkwelle 14 selbstverständlich mit allen funktionalen Abschnitten derselben einstückig ausgebildet sein.

## Patentansprüche

1. Abgasklappe, insbesondere für den Abgasstrom einer Brennkraftmaschine, umfassend:
- ein Klappenrohr (12), eine im Inneren des Klappenrohrs (12) an einer um eine Schwenkachse (A) drehbaren Schwenkwelle (14) getragene Klappenblende (16),
- einen Schwenkantrieb (29) für die Schwenkwelle (14),
- eine die Schwenkwelle (14) mit einer Antriebswelle (34) des Schwenkantriebs (29) zur gemeinsamen Drehung um die Schwenkachse (A) koppelnde Kopplungsanordnung (36), wobei die Kopplungsanordnung (36) einen mit der Antriebswelle (34) in Drehkopplungsformschlusseingriff stehenden ersten Kopplungsbereich (42) und einen mit der Schwenkwelle (14) in Drehkopplungsformschlusseingriff stehenden zweiten Kopplungsbereich (44) umfasst,
- ein bezüglich der Kopplungsanordnung (36) einerseits und bezüglich einer Welle von Antriebswelle (34) und Schwenkwelle (14) andererseits abgestütztes Vorspannorgan (58), wobei durch das Vorspannorgan (58) die Kopplungsanordnung (36) in Richtung der Schwenkachse (A) von der einen Welle von Antriebswelle (34) und Schwenkwelle (14) axial weg vorgespannt ist,
**dadurch gekennzeichnet,**
**dass** die Kopplungsanordnung (36) durch das Vorspannorgan (58) bezüglich der einen Welle von Antriebswelle (34) und Schwenkwelle (14) um die Schwenkachse (A) vorgespannt ist,
**dass** das Vorspannorgan (58) bezüglich der einen Welle über ein Verbindungselement (66) abgestützt ist, und
**dass** das Verbindungselement (66) an der einen Welle sich axial abstützend mit der einen Welle drehfest gekoppelt ist.

2. Abgasklappe nach Anspruch 1, **dadurch gekennzeichnet, dass** das Vorspannorgan (58) eine Schraubenfeder umfasst.

3. Abgasklappe nach Anspruch 1 oder 2, **dadurch gekennzeichnet, dass** das Vorspannorgan (58) in einem ersten Verbindungsbereich bezüglich der einen Welle über das Verbindungselement (66) sich axial abstützend an die eine Welle in Umfangsrichtung um die Schwenkachse (A) fest angekoppelt ist und in einem zweiten Verbindungsbereich bezüglich der Kopplungsanordnung (36) sich axial abstützend an die Kopplungsanordnung (36) in Umfangsrichtung um die Schwenkachse (A) fest angekoppelt ist.

4. Abgasklappe nach Anspruch 3, **dadurch gekennzeichnet, dass** der erste Verbindungsbereich einen in einem ersten axialen Endbereich (62) des Vorspannorgans (58) sich erstreckenden ersten Windungsendabschnitt (64) umfasst, und dass der zweite Verbindungsbereich einen in einem zweiten axialen Endbereich (68) des Vorspannorgans (58) sich erstreckenden zweiten Windungsendabschnitt (70) umfasst.

5. Abgasklappe nach Anspruch 3 oder 4, **dadurch gekennzeichnet, dass** der erste Verbindungsbereich des Vorspannorgans (58) an das Verbindungselement (66) fest angekoppelt ist.

6. Abgasklappe nach einem der vorangehenden Ansprüche, **dadurch gekennzeichnet, dass** an der einen Welle wenigstens eine, vorzugsweise mehrere Verbindungsaussparungen (80) vorgesehen sind, und dass an dem Verbindungselement (66) wenigstens ein, vorzugsweise in Zuordnung zu jeder Verbindungsaussparung (80) ein in eine Verbindungsaussparung (80) eingreifender und in einem Verbindungszustand an der einen Welle sich axial und in Umfangsrichtung abstützender Verbindungsvorsprung (92) vorgesehen ist.

7. Abgasklappe nach Anspruch 6, **dadurch gekennzeichnet, dass** die wenigstens eine Verbindungsaussparung (80) einen in Richtung zu der anderen Welle offenen, vorzugsweise axial sich erstreckenden Einführabschnitt (82) sowie einen in Richtung von der anderen Welle weg axial abgeschlossenen, in Umfangsrichtung bezüglich des Einführabschnitts (82) versetzten und vermittels eines Übergangsabschnitts (88) mit dem Einführabschnitt (82) verbundenen, vorzugsweise axial sich erstreckenden Verbindungsabschnitt (86) umfasst, wobei eine axiale Bewegung eines Verbindungsvorsprungs (92) in der wenigstens einen Verbindungsaussparung (80) durch deren Einführabschnitt (82) zu deren Verbindungsabschnitt (86) eine Verdrehung des Verbindungselements (66) bezüglich der einen Welle um die Schwenkachse (A) bewirkt.

8. Abgasklappe nach Anspruch 2 oder einem der Ansprüche 3-7, sofern auf Anspruch 2 rückbezogen, **dadurch gekennzeichnet, dass** das Vorspannorgan (58) wenigstens eine, vorzugsweise eine Mehrzahl von Windungen (60) umfasst.

9. Abgasklappe nach einem der vorangehenden Ansprüche, **dadurch gekennzeichnet, dass** im ersten Kopplungsbereich (42) die Kopplungsanordnung (36) eine erste Formschluss-Eingriffsöffnung (48) mit einer Eingriffsöffnung-Querschnittsgeometrie aufweist und die Antriebswelle (34) ein in die erste Formschluss-Eingriffsöffnung (48) eingreifendes Formschluss-Eingriffsende (50) mit zur Eingriffsöffnung-Querschnittsgeometrie der ersten Formschluss-Eingriffsöffnung (48) komplementärer Eingriffsende-Querschnittsgeometrie aufweist, oder/und dass im zweiten Kopplungsbereich (44) die Kopplungsanordnung (36) eine zweite Formschluss-Eingriffsöffnung (52) mit einer Eingriffsöffnung-Querschnittsgeometrie aufweist und die Schwenkwelle (14) ein in die zweite Formschluss-Eingriffsöffnung (52) eingreifendes Formschluss-Eingriffsende (54) mit zur Eingriffsöffnung-Querschnittsgeometrie der zweiten Formschluss-Eingriffsöffnung (52) komplementärer Eingriffsende-Querschnittsgeometrie aufweist.

10. Abgasklappe nach Anspruch 9, **dadurch gekennzeichnet, dass** das Formschluss-Eingriffsende (50) der einen Welle in Richtung der Schwenkachse (A) im Wesentlichen zylindrisch ausgebildet ist.

11. Abgasklappe nach einem der vorangehenden Ansprüche, **dadurch gekennzeichnet, dass** die Kopplungsanordnung (36) und das Vorspannorgan (58) an der anderen Welle gegen Loslösen von der anderen Welle gesichert getragen sind.

12. Abgasklappe nach einem der vorangehenden Ansprüche, **dadurch gekennzeichnet, dass** die eine Welle die Antriebswelle (34) und die andere Welle die Schwenkwelle (14) ist.

13. Abgasklappe nach einem der vorangehenden Ansprüche, **dadurch gekennzeichnet, dass** die Kopplungsanordnung (36) ein im ersten Kopplungsbereich (42) und im zweiten Kopplungsbereich (44) im Wesentlichen plattenartig ausgebildetes und zur Schwenkachse (A) im Wesentlichen orthogonal ausgerichtetes Kopplungselement (46) umfasst.

14. Abgasklappe nach Anspruch 13, **dadurch gekennzeichnet, dass** in wenigstens einem der Kopplungsbereiche (42, 44) die Kopplungsanordnung (36) einander überlappend angeordnete Kopplungselement-Endbereiche aufweist.

## Claims

1. Exhaust gas flap, especially for the exhaust gas stream of an internal combustion engine, comprising:
- a flap tube (12), a flap diaphragm (16), which is carried in the interior of the flap tube (12) on a pivot shaft (14) rotatable about a pivot axis (A),
- a pivot drive (29) for the pivot shaft (14),
- a coupling device (36) coupling the pivot shaft (14) to a drive shaft (34) of the pivot drive (29) for joint rotation about the pivot axis (A), the coupling device (36) comprising a first coupling area (42) that is in a state of rotary coupling positive-locking meshing with the drive shaft (34) and a second coupling area (44) that is in a state of rotary coupling positive-locking meshing with the pivot shaft (14),
- a prestressing element (58), which is supported in relation to the coupling device (36), on the one hand, and in relation to one shaft of the drive shaft (34) and the pivot shaft (14), on the other hand, wherein the coupling device (36) is prestressed by the prestressing element (58) in the direction of the pivot axis (A) axially away from the one shaft of the drive shaft (34) and the pivot shaft (14),
**characterized**
**in that** the coupling device (36) is prestressed by the prestressing element (58) about the pivot axis (A) in relation to the one shaft of the drive shaft (34) and the pivot shaft (14),
**in that** the prestressing element (58) is supported via a connection element (66) in relation to the one shaft, and
**in that** the connection element (66) is coupled in a nonrotatable manner to the one shaft, being axially supported on the one shaft.

2. Exhaust gas flap in accordance with claim 1, **characterized in that** the prestressing element (58) comprises a coil spring.

3. Exhaust gas flap in accordance with claims 1 or 2, **characterized in that** the prestressing element (58) is permanently coupled in a first connection area in relation to the one shaft via the connection element (66), being axially supported on the one shaft about the pivot axis (A) in the circumferential direction, and is permanently coupled in a second connection area in relation to the coupling device (36), being axially supported on the coupling device (36) about the pivot axis (A) in the circumferential direction.

4. Exhaust gas flap in accordance with claim 3, **characterized in that** the first connection area comprises a first winding end section (64) extending in a first axial end area (62) of the prestressing element (58), and that the second connection area comprises a second winding end section (70) extending in a second axial end area (68) of the prestressing element (58).

5. Exhaust gas flap in accordance with claim 3 or 4, **characterized in that** the first connection area of the prestressing element (58) is permanently coupled to the connection element (66).

6. Exhaust gas flap in accordance to one of the preceding claims, **characterized in that** at least one and preferably several connection recesses (80) are provided on the one shaft, and that at least one connection projection (92), preferably a connection projection (92) in association with each connection recess (80), which meshes with a connection recess (80) and is axially supported on the one shaft in a connected state and in the circumferential direction, is provided on the connection element (66).

7. Exhaust gas flap in accordance with claim 6, **characterized in that** the at least one connection recess (80) comprises an insertion section (82), which is open and preferably extends axially in the direction towards the other shaft as well as a connection section (86) which preferably extends axially, is closed axially in the direction away from the other shaft, is offset in relation to the insertion section (82) in the circumferential direction and is connected by means of a transition section (88) to the insertion section (82), wherein an axial movement of a connection projection (92) in the at least one connection recess (80) through the insertion section (82) thereof to the connection section (86) thereof brings about a rotation of the connection element (66) about the pivot axis (A) in relation to the one shaft.

8. Exhaust gas flap in accordance with claim 2 or one of claims 3-7, if referring back to claim 2, **characterized in that** the prestressing element (58) comprises at least one and preferably a plurality of windings (60).

9. Exhaust gas flap in accordance with one of the preceding claims, **characterized in that** in the first coupling area (42), the coupling device (36) has a first positive-locking meshing opening (48) with a meshing opening cross-sectional geometry and the drive shaft (34) has a positive-locking meshing end (50), which meshes with the first positive-locking meshing opening (48) and which has a meshing end cross-sectional geometry complementary to the meshing opening cross-sectional geometry of the first positive-locking meshing opening (48), or/and that in the second coupling area (44), the coupling device (36) has a second positive-locking meshing opening (52) with a meshing opening cross-sectional geometry and the pivot shaft (14) has a positive-locking meshing end (54) that meshes with the second positive-locking meshing opening (52) and that has a meshing end cross-sectional geometry complementary to the meshing opening cross-sectional geometry of the second positive-locking meshing opening (52).

10. Exhaust gas flap in accordance with claim 9, **characterized in that** the positive-locking meshing end (50) of the one shaft has an essentially cylindrical configuration in the direction of the pivot axis (A).

11. Exhaust gas flap in accordance with one of the preceding claims, **characterized in that** the coupling device (36) and the prestressing element (58) are carried on the other shaft in a manner secured against detachment from the other shaft.

12. Exhaust gas flap in accordance with one of the preceding claims, **characterized in that** the one shaft is the drive shaft (34) and the other shaft is the pivot shaft (14).

13. Exhaust gas flap in accordance with one of the preceding claims, **characterized in that** the coupling device (36) comprises a coupling element (46), which has an essentially plate-shaped configuration in the first coupling area (42) and in the second coupling area (44) and is aligned essentially at right angles to the pivot axis (A).

14. Exhaust gas flap in accordance with claim 13, **characterized in that** the coupling device (36) has coupling element end areas that are arranged overlapping one another in at least one of the coupling areas (42, 44).

## Revendications

1. Clapet de gaz d'échappement, en particulier pour le flux de gaz d'échappement d'un moteur à combustion interne, comprenant :
- un tube de clapet (12), un diaphragme de clapet (16), qui est porté à l'intérieur du tube de clapet (12) sur un arbre de pivotement (14) pouvant tourner autour d'un axe de pivotement (A),
- un entraînement de pivotement (29) pour l'arbre de pivotement (14),
- un dispositif d'accouplement (36) couplant l'arbre de pivotement (14) à un arbre d'entraînement (34) de l'entraînement de pivotement (29) pour une rotation conjointe autour de l'axe de pivotement (A), le dispositif d'accouplement (36) comprenant une première zone d'accouplement (42) qui est dans un état d'accouplement rotatif à engagement positif avec l'arbre d'entraînement (34) et une deuxième zone d'accouplement (44) qui est dans un état d'accouplement rotatif à engagement positif avec l'arbre de pivotement (14),
- un élément de précontrainte (58), qui est supporté par rapport au dispositif d'accouplement (36), d'une part, et par rapport audit un arbre de l'arbre d'entraînement (34) et de l'arbre de pivotement (14), d'autre part, dans lequel le dispositif d'accouplement (36) est précontraint par l'élément de précontrainte (58) dans la direction de l'axe de pivotement (A) axialement à l'opposé dudit un arbre de l'arbre d'entraînement (34) et de l'arbre de pivotement (14),
**caractérisé en ce que**
le dispositif d'accouplement (36) est précontraint par l'élément de précontrainte (58) autour de l'axe de pivotement (A) par rapport audit un arbre de l'arbre d'entraînement (34) et de l'arbre de pivotement (14),
**en ce que** l'élément de précontrainte (58) est soutenu par un élément de raccordement (66) par rapport audit un arbre, et
**en ce que** l'élément de connexion (66) est couplé de manière non rotative audit un arbre, en s'appuyant axialement sur ledit un l'arbre.

2. Clapet de gaz d'échappement selon la revendication 1, **caractérisé en ce que** l'élément de précontrainte (58) comprend un ressort hélicoïdal.

3. Clapet de gaz d'échappement selon la revendication 1 ou 2, **caractérisé en ce que** l'élément de précontrainte (58) est couplé de manière permanente dans une première zone de raccordement par rapport audit un arbre par l'intermédiaire de l'élément de raccordement (66), en s'appuyant axialement sur ledit un arbre autour de l'axe de pivotement (A) dans la direction circonférentielle, et est couplé de manière permanente dans une deuxième zone de raccordement par rapport au dispositif d'accouplement (36), en s'appuyant axialement sur le dispositif d'accouplement (36) autour de l'axe de pivotement (A) dans la direction circonférentielle.

4. Clapet de gaz d'échappement selon la revendication 3, **caractérisé en ce que** la première zone de raccordement comprend une première section d'extrémité d'enroulement (64) s'étendant dans une première zone d'extrémité axiale (62) de l'élément de précontrainte (58), et **en ce que** la deuxième zone de raccordement comprend une deuxième section d'extrémité d'enroulement (70) s'étendant dans une deuxième zone d'extrémité axiale (68) de l'élément de précontrainte (58).

5. Clapet de gaz d'échappement selon la revendication 3 ou 4, **caractérisé en ce que** la première zone de raccordement de l'élément de précontrainte (58) est couplée de manière permanente à l'élément de raccordement (66).

6. Clapet de gaz d'échappement selon l'une des revendications précédentes, **caractérisé en ce qu'**au moins un et de préférence plusieurs évidements de raccordement (80) sont prévus sur leditun arbre, et **en ce qu'**au moins une saillie de raccordement (92), de préférence une saillie de raccordement (92) associée à chaque évidement de raccordement (80), qui engrène avec un évidement de raccordement (80) et qui s'appuie axialement sur ledit un arbre dans un état de raccordement et dans la direction circonférentielle, est prévue sur l'élément de raccordement (66).

7. Clapet de gaz d'échappement selon la revendication 6, **caractérisé en ce que** ledit au moins un évidement de raccordement (80) comprend une section d'insertion (82), qui est ouverte et qui s'étend de préférence axialement en direction de l'autre arbre, ainsi qu'une section de raccordement (86), qui s'étend de préférence axialement et qui est fermée axialement dans la direction opposée à l'autre arbre, est décalé par rapport à la section d'insertion (82) dans la direction circonférentielle et est relié à la section d'insertion (82) au moyen d'une section de transition (88), dans lequel un mouvement axial d'une saillie de raccordement (92) dans ledit au moins un évidement de raccordement (80) à travers la section d'insertion (82) de celui-ci vers la section de raccordement (86) de celui-ci provoque une rotation de l'élément de raccordement (66) autour de l'axe de pivotement (A) par rapport audit un arbre.

8. Clapet de gaz d'échappement selon la revendication 2 ou selon l'une des revendications 3 à 7, si l'on se réfère à la revendication 2, **caractérisé en ce que** l'élément de précontrainte (58) comprend au moins un et de préférence une pluralité d'enroulements (60).

9. Clapet de gaz d'échappement selon l'une des revendications précédentes, **caractérisé en ce que** le dispositif d'accouplement (36) présente, dans la première zone d'accouplement (42), une première ouverture d'engrènement à engagement positif (48) avec une géométrie de section transversale d'ouverture d'engrènement et l'arbre d'entraînement (34) présente une extrémité d'engrènement à engagement positif (50), qui s'engrène avec la première ouverture d'engrènement à engagement positif (48) et qui présente une géométrie de section transversale d'extrémité d'engrènement complémentaire de la géométrie de section transversale d'ouverture d'engrènement de la première ouverture d'engrènement à engagement positif (48), ou/et que dans la deuxième zone d'accouplement (44), le dispositif d'accouplement (36) présente une deuxième ouverture d'engrènement à engagement positif (52) avec une géométrie de section transversale d'ouverture d'engrènement et l'arbre de pivotement (14) présente une extrémité d'engrènement à engagement positif (54) qui s'engrène avec la deuxième ouverture d'engrènement à engagement positif (52) avec une géométrie de section transversale d'extrémité d'engrènement complémentaire à la géométrie de section transversale d'ouverture d'engrènement de la deuxième ouverture d'engrènement à engagement positif (52).

10. Clapet de gaz d'échappement selon la revendication 9, **caractérisé en ce que** l'extrémité d'engrènement à engagement positif (50) dudit un arbre a une configuration essentiellement cylindrique dans la direction de l'axe de pivotement (A).

11. Clapet de gaz d'échappement selon l'une des revendications précédentes, **caractérisé en ce que** le dispositif d'accouplement (36) et l'élément de précontrainte (58) sont portés sur l'autre arbre de manière à ne pas pouvoir se détacher de l'autre arbre.

12. Clapet de gaz d'échappement selon l'une des revendications précédentes, **caractérisé en ce que** ledit un arbre est l'arbre d'entraînement (34) et l'autre arbre est l'arbre de pivotement (14).

13. Clapet de gaz d'échappement selon l'une des revendications précédentes, **caractérisé en ce que** le dispositif d'accouplement (36) comprend un élément d'accouplement (46), qui a une configuration essentiellement en forme de plaque dans la première zone d'accouplement (42) et dans la deuxième zone d'accouplement (44) et est orienté essentiellement à angle droit par rapport à l'axe de pivotement (A).

14. Clapet de gaz d'échappement selon la revendication 13, **caractérisé en ce que** le dispositif d'accouplement (36) présente des zones d'extrémité de l'élément d'accouplement qui sont disposées en se chevauchant dans au moins une des zones d'accouplement (42, 44).
